# EUROPÄISCHE PATENTANMELDUNG

(11) **EP 1 820 392 A2**
(43) Veröffentlichungstag der Anmeldung: **22.08.2007**
(21) Anmeldenummer: 07001385.9
(22) Anmeldetag: 23.01.2007
(51) Int. Cl.: A01G 13/02

(54) **Streugut zur Abdeckung von Kultursubstraten bzw. Blumenerden in Pflanzcontainern oder als Bodenbelag**

(30) Priorität: 26.01.2006 DE 102006004272
(71) Anmelder: Brinkmann, Udo, 41516 Grevenbroich (DE)
(72) Erfinder: Brinkmann, Udo, 41516 Grevenbroich (DE)

(57) **Zusammenfassung**

Bisherige Abdeckungsverfahren führten durch ihre Material-Eigenschaff an sich dazu, dass
- dem Wachstumsmedium Stickstoff aufgrund bakerieller Vorgänge entzogen wird
- das Wachstumsmedium mit Unkraut kontaminiert werden kann
- das Abeckmaterial durch das allgemeine Handling verloren geht, somit muss Material nachträglich aufgetragen werden.

Das neue Streugut trägt durch seine Produkteingenschaften an sich dazu bei, dass kein Stickstoff entzogen wird und eine Kontaminierung mit Unkraut verhindert wird.
Durch den Hafteffekt, welcher durch die Verwendung von Kakaoschalen begründet ist, wird sichergestellt, dass kein Streugut beim Handling verloren geht. Hierdurch wird ein Austrocknen des Wachstumsmedium verhindert Zudem ist kein nachträgliches Auftragen notwendig.
Weiterhin muss kein Unkrautvernichtungsmittel eingesetzt werden bzw. zusätzliches Personal, welches gewachsene Unkräuter entfernt.

Dieses Streumaterial ist zum Einsatz im Garten- und Landschaftsbau vorgesehen und besteht aus einem Gemisch naturreinen, unbehandelten Kakaoschalen und Pinienrinde.
Insbesondere empfiehlt sich die Anwendung für Baumschulen, welche ihre Kulturen in Pflanzcontainer (=spezielle Pflanztöpfe) züchten.

## Beschreibung

Streugut zur Abdeckung von Kultursubstraten bzw. Blumenerden in Pflanzcontainern oder als Bodenbeläge.

Dieses Streugut ist zum Einsatz im Garten- und Landschaftsbau vorgesehen und besteht ausschließlich aus einem Gemisch naturreiner Pinienrinde und Kakaoschalen.

Mit diesem Streugut sollen insbesondere Wachstumsmedien (=BlumenerdenlKultursubstrate), in den Pflanzkulturen gezogen werden, abgedeckt werden.

Bisherige Abdeckungsverfahren auschließlich mit Rindenmulch aus üblichen Holzarten wie Pinie, Fichte, etc, führten durch die Eigenschaft des Rindenmulches an sich dazu, dass dem Wachstumsmedium Stickstoff aufgrund bakerieller Vorgänge im Rinenmulch entzogen wird.

Da Stickstoff für jede Pflanzkultur ein elementares Nährstoffelement darstellt, bedeutet dieser Entzug von Stickstoff eine entsprechende Nährstoffunterversorgung und macht eine Nachdüngung mit Stickstoffdüngern erforderlich.
Diese Nachdüngung ist grundsätzlich unter Berücksichtung zusätzlichen Material-, Zeit- und Personalaufwandes als kritisch zu erachten.
Ebenso kann ein Kulturschaden durch Stickstoffmangel nicht ausgeschlossen werden.

Bezüglich der Unterversorgung mit Stickstoff kann den bakteriologischen Vorgängen durch die Zumischung von Kakaoschalen zum Rindenmulch entgegengewirkt werden,
Bei Ausbringung geben Kakaoschalen im natürlichem Zersetzungsprozess Stickstoff frei und können auf diese Weise den Stickstoffentzug von reinem Rindenmulch entgegenwirken und somit das Stickstoffniveau im Wachstumsmedium ausgleichen.

Zudem kann herkömmlicher Rindenmulch jederzeit bei der Anwendung im Freien durch Wind und Sturm vom Wachstumsmedium weggeweht werden bzw. durch das Handling (bspw. Transport der der Pflanzcontainer) abgetragen werden.
Das Wachstumsmedium wird somit dem freien Flug von Unkräutern ausgesetzt und auf diesem Wege kontaminiert, weiches sich negativ auf den Fortbestand der Pflanzkultur auswirken kann.
Dies macht eine zusätzliche Behandlung mit Pflanzenschutzmitteln erforderlich, welches sich unter der Berücksichtigung zusätzlichen Material-, Zeit- und Personalaufwandes als kritisch zu erachten ist Ebenso kann ein Kulturschaden nicht ausgeschlossen werden.
Durch das Abtragen des Rindenmulches wird das Wachstumsmedium auch zusätzlicher Sonneneinstrahlung ausgesetzt und kann austrocknen.

### (Literaturquelle: Herr Welz)

In Verbindung mit Feuchtigkeit bilden die Kakaoschalen im natürlichen Zersetzungsprozess eine Klebeschicht, wodurch ein Anhaften am Wachstumsmedium erreicht wird.
Zudem haftet die Pinienrinde an den Kakaoschalen. Ein Abtragen wird somit verhindert.

## Patentansprüche

1. Streugut zur Abdeckung von Kultursubstraten bzw. Blumenerden in Pflanzcontainern oder als Bodenbelag
(Im folgenden werden Kultursubstrate bzw. Blumenerden als Wachstumsmedien bezeichnet.)

2. Dieses Streugut besteht aus einem Gemisch aus naturreiner Pinienrinde und naturreinen Kakaoschalen.

3. Hierbei werden wesentliche natürliche Eigenschaften der beiden Produkte Pinienrinde und Kakaoschalen genutzt. Die positiven Wirkungsweisen beider Produkte werden somit kombiniert und Nachteile einzelner Produkteigenschaften eliminiert:
- Es wird durch die Ausbringung vom genanntem Streugutgemisch aus Pinienrinde und Kakaoschalen ein optimaler Sticksoffgehalt im Wachstumsmedium herbeigeführt Stickstoff. welcher durch die Pinienrinde dem Wachstumsmedium entzogen wird, wird durch die Stickstoffabgabe der Kakaoschalen an das Wachstumsmedium zurückgegeben. Eine optimale Stickstoffversorgung wird gewährleistet. (vgl. hierzu Ausführungen Produktbeschreibung)
- Durch eine Erhöhung des Anteiles von Kakaoschalen kann noch eine zusätzlich Stickstoffdüngung erfolgen
- Es wird durch den Haftungseffekt der Kakaoschalen verhindert (vgl, Produkt-beschreibung), dass das Streugut durch Wind oder Sturm bzw. tägliches Händling vom Wachsturnsmedium weggetragen bzw. weggeweht wird.
Hierdurch werden die wesentlichen und bekannten Eigenschaften bei ausschließlicher Abdeckung mit Pinienrinde gefordert:
- Es wird ein natürlicher Schutz vor Unkraut durch Bodenbeschattung erzielt
- Es wird ein natürlicher Schutz vor Unkraut durch die Freisetzung von Gerbsäure aus der Pinienrinde erzielt
- Bei Sonneneinstrahlung bzw. hohen Temperaturen wird ein Austrocknen des Wachstumsmedium verhindert, da Feuchtigkeit nicht entweichen kann
- der unangenehme Geruch eines Streugutes aus reinem Rindenmulch bzw. Pinienrinde wird durch einen wohlriechenden Duft mit Kakaonote ersetzt, welches zusätzliche Vorteile bei der Warenausbietung und bei der Dekoration von bspw. Pflanzbeeten einherbringt.
